# EUROPEAN PATENT APPLICATION

(11) **EP 4 617 427 A1**
(43) Date of publication of application: **17.09.2025**
(21) Application number: 25160414.6
(22) Date of filing: 26.02.2025
(51) Int. Cl.: E01C 11/22, H02G 9/00

(54) **MODULAR KERB**

(30) Priority: 13.03.2024 GB 202403649
(71) Applicant: Cotswold Restorations Ltd, Langford, Gloucestershire GL7 3LD (GB)
(72) Inventor: Taylor, Mark David, GL7 3LO (GB)
(74) Representative: Games, Robert Harland

(57) **Abstract**

A modular kerb 10 for installing as part of a road comprises a first end 12 and a second end 14; a rear surface, a lower surface 18, a front surface 16 and an upper surface 20. The first end 12 has a first engagement profile and the second end 14 has a second corresponding engagement profile, the first engagement profile being engageable with the second engagement profile of one or more other modular kerbs and the second engagement profile being engageable with the first engagement profile of one or more other modular kerbs. The kerb has a channel 26 set into the lower surface 18 and extending between the first end 12 and second end 14 for receiving at least one power cable and/or data cable.

## Description

The present invention relates to a modular kerb and particularly but not exclusively to a modular kerb for installing as part of a road.

### BACKGROUND TO THE INVENTION

It is common to dig up a road or pavement at the side of a road in order to install power or data cabling underground. This can be an extremely expensive and disruptive process.

However, there is often a kerb laid at the side of the road to retain the surface of the road, thus preventing spreading and breakage of the road surface at the edge of the road. The kerb is typically higher than the road surface providing a channel for directing surface water along the road. The kerb also provides a demarcation between the road and a footpath.

Kerbs are made from cast concrete and are laid in line on a bed of substantially flat concrete and are supported at their rear by haunched concrete. The haunched concrete does not extend the full height of the rear of the kerb, but is maintained around 65 to 100mm below the upper surface, to allow for a surfacing material behind the kerb to be laid level with the kerb. This may be, for example, block paving, tarmac, grass or other surface.

It is known to provide internal channels in kerb stones, for example to channel water away from a road. The idea of providing a central aperture through a kerb stone has also been proposed for receiving cabling, but it is not a practical solution, because it would be extremely difficult to install. The cabling would be difficult to thread, but also to pull through. It is not known to be in use commercially.

Ducts are often laid underground during construction works and a pull-through-cord is often threaded into the ducting as it is laid to enable cables to be pulled through the ducting later. However, ducting is extremely light, smooth internally preventing snagging, and easy to connect. Kerb stones, on the other hand, are heavy, around 76kg for a standard 900mm long kerb stone, and have to be handled with lifting gear or with at least two men, preferably with closable kerb lifters.

It is an object of the present invention to reduce or substantially obviate the aforementioned problems.

### STATEMENT OF INVENTION

According to a first aspect of the present invention there is provided a modular kerb for installing as part of a road, the modular kerb comprising:
a first end and a second end; a rear surface, a lower surface, a front surface and an upper surface,
the first end having a first engagement profile and the second end having a second corresponding engagement profile, the first engagement profile being engageable with the second engagement profile of one or more other modular kerbs and the second engagement profile being engageable with the first engagement profile of one or more other modular kerbs; and
the kerb having a channel set into the lower surface and extending between the first end and second end for receiving at least one power cable and/or data cable.

The modular kerb is advantageous because the channel in the lower surface allows a cable, pull through cord or even a ducting to be laid out on a concrete bed before the kerb is installed. In other words, the cable does not have to be threaded. This is important, because it allows kerb modules to be positioned straightforwardly, usually to a string or line.

Furthermore, the engagement profiles at the ends of the modular kerbs can be easily connected, which prevents any slipping between kerb modules damaging a cable in the channel.

The first engagement profile may be a protrusion and the second engagement profile may be a recess. The protrusion may have a substantially triangular cross section.

By using a triangular cross section, as two respective kerb modules are brought together, the triangular nature of the protrusion guides the kerb module being installed into the correct lateral position relative to the adjacent kerb module, ie it is self-centring or self-aligning.

A shaped profile may extend between the front surface and upper surface. For example, the shaped profile may be a bull nose, half batter or full batter. It is known to shape the edges of kerb stones, and the modular kerb stones can be similarly shaped.

The modular kerb may be made from plastics, preferably PVC. The modular kerb may be made exclusively from plastics. PVC is highly durable and can be moulded in different colours. It is not susceptible to cracking in the same way as a concrete kerb. Furthermore, a 900mm modular kerb typically weights 18kg in PVC, ie less than a quarter of the weight of a concrete kerbstone. This provides a significant advantage in material handling because a single workman can handle the modular kerb. Furthermore, over four times the number can be carried on a truck to site.

The modular kerb may be integrally formed. The modular kerb may be moulded as a unitary piece. In other words, each modular element may be a single unitary piece.

The height of the modular kerb may be between 240mm and 260mm and the thickness of the kerb may be between 115mm to 125mm. This is slightly smaller than a standard kerbstone, which enables a modular kerb to be fitted as a replacement in place of a concrete kerbstone without requiring relaying of concrete. The modular kerb may be laid on a bed of adhesive, for example a resin. The resin bed may be typically 3-6mm, preferably 4mm in thickness.

The cross section of the channel may be a minimum clearance fit for a 50mm square duct. The channel may be along the central axis of the modular kerb. In other embodiments, the channel may be off-set from the centre and may be larger or smaller to fit alternative ducting, for example. The channel is substantially square or rectangular in cross section, but may be curved at it's upper end to reduce stress raisers in the material and to assist with moulding.

The modular kerb may be straight and may have a length of between 450mm and 1000mm. The modular kerb may have a length of between 800mm and 1000mm.

Preferably, the modular kerb has a length of around 910mm. Preferably, the modular kerb has a thickness of around 120mm. Preferably, the modular kerb has a height of around 255mm.

Alternatively, the modular kerb may be provided in an internal or external curve, may be tapered in height, and/or extend around an internal or external corner.

At least one lifting eye may be disposed in the upper surface of the modular kerb. The lifting is most advantageous in a smaller length of modular kerb, for example, 450mm in length, which may be lifted out to reveal the cable underneath. There may be two lifting eyes, one at each end of the modular kerb. The lifting eye may fit a standard manhole cover lifting key, for example, which is a bayonet style connection.

A cavity may be provided through the kerb between the upper surface and the channel for accessing a cable. The cavity may comprise a hook for storing a coil of the cable.

The transition surface areas between the cavity and the channel may be curved. This is intended to prevent cable snagging.

A releasable cover may be provided over the cavity in the upper surface. The cover may be secured with a twist lock. The cover may enable a cable in the cavity to be accessed from the top of the modular kerb.

A rear channel may be provided from the rear surface into the channel. The rear channel may extend into the cavity. A transition surface between the rear channel and the cavity may be curved, again to try and reduce cable snagging.

The rear channel may provide access to the cable for making a connection from the payment side of the modular kerb.

According to a second aspect of the invention there is provided a method of installing a modular kerb of the first aspect of the invention comprising providing a concrete bed for the modular kerb, laying a cable along the concrete bed, and lowering the modular kerb onto the bed with the cable being received in the channel.

One or more modular kerbs may be subsequently connected to the first laid modular kerb, ie to form a continuous kerb along a road, for example. Concrete may be provided in a haunch along the rear side of the or each modular kerb.

Due to the durability of the modular kerbs, advantageously they can be utilised in road building into a new building site to retain a temporary road surface. After use, the kerb can be removed and re-used at another site for the same purpose. Fresh modular kerbs may be installed prior to final finishing of the road.

Advantageously, the temporary kerbing can safely direct power into a new site, ie protected under the modular kerb, but not underground.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a perspective view of a first embodiment of a modular kerb;
Figure 2 shows an exploded perspective view of a second embodiment of a modular kerb;
Figure 3 shows a perspective view of two modular kerbs of Figure 1 and one modular kerb of Figure 2 installed in a pavement;
Figure 4 shows a perspective view of a third embodiment of a modular kerb;
Figure 5 shows a perspective view of a fourth embodiment of a modular kerb;
Figure 6a shows a perspective view of a fifth embodiment of a modular kerb; and
Figure 6b shows a perspective view of a sixth embodiment of a modular kerb

### DESCRIPTION OF PREFERRED EMBODIMENTS

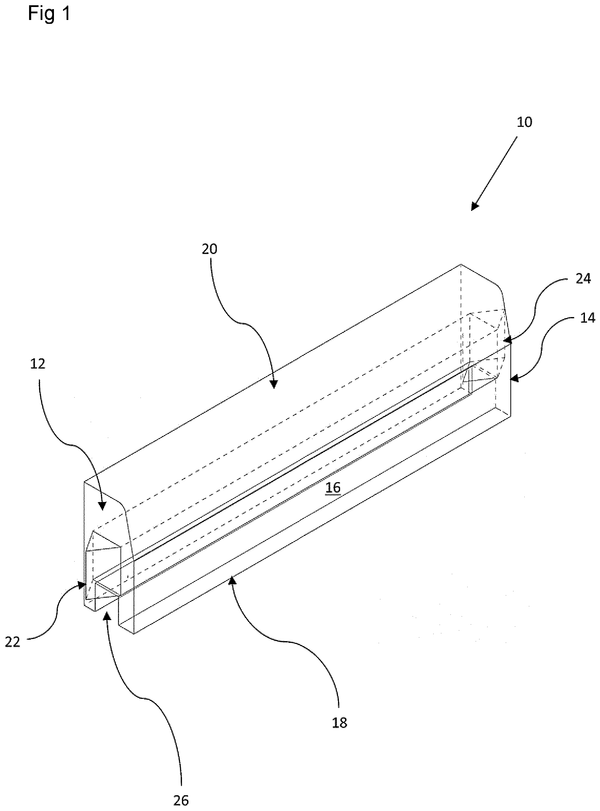

Referring firstly to Figure 1, a first embodiment of a modular kerb is generally shown at 10. The modular kerb 10 can be used as one part of a larger kerb as described below. A channel 26 is provided through the modular kerb 10 for receiving a power and/or data cable.

The modular kerb 10 has a first end 12. The modular kerb 10 has a second end 14 opposing the first end 12. The modular kerb 10 has a rear surface (not shown). The modular kerb 10 has a front surface 16 opposing the rear surface. The modular kerb has a lower surface 18. The modular kerb 10 has an upper surface 20 opposing the lower surface 18. In this embodiment, the modular kerb 10 has a half-batter profile. The modular kerb 10 has a length of around 900mm and a height of around 250 mm.

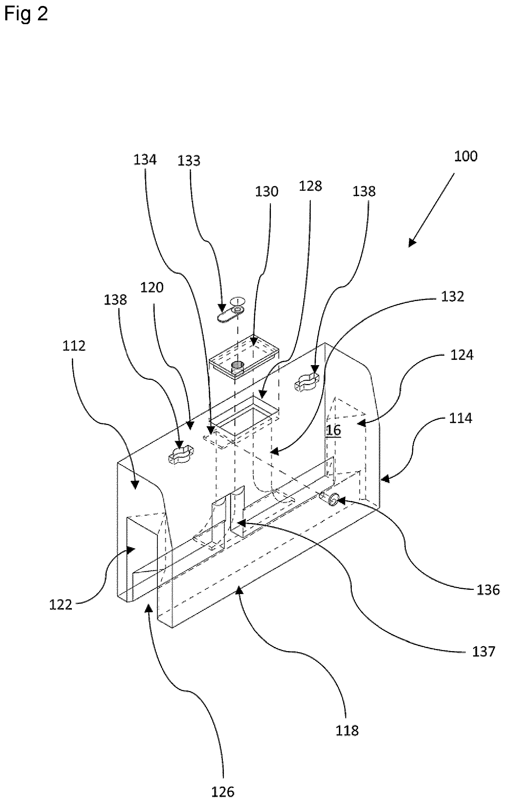

The modular kerb 10 includes first and second engagement profiles for engaging engagement profiles of similar modular kerbs, or for example, of a second embodiment of the modular kerb 100 described with respect to Figure 2 below. The first engagement profile is disposed at the first end 12. The second engagement profile is disposed at the second end 14. The engagement profiles provide a means of engaging multiple modular kerbs 10, 100 together to form a longer, continuous kerb.

In this embodiment, the first and second engagement profiles include protrusions 22, 24. The protrusions correspond to recesses 122, 124 in the second embodiment of the modular kerb as described below. It will be appreciated that in other embodiments, The first and second engagement profiles may include recesses.

The channel 26 extends along the full length of the modular kerb 10. The channel 26 is provided in the lower surface 18. Providing the channel 26 in this manner allows the modular kerb 10 to be positioned above cable. This is far more practical than threading the cable through a central aperture, for example. The channel 26 extends along a central axis of the modular kerb 10. The cross section of the channel 26 has a clearance fit for a 50mm square duct.

In preferred embodiments, the modular kerb 10 is formed from a plastic. For example, in this embodiment, the modular kerb 10 is constructed with PVC. A modular kerb 10 formed from plastic is significantly lighter than traditional concrete kerbs. This allows more straightforward installation and facilitates installing the cables inside the channel 26. Furthermore, the plastic can be moulded in a range of colours, is more durable, and is easier to replace than concrete kerbs.

In preferred embodiments, the modular kerb 10 is a single unitary piece. The modular kerb 10 is integrally formed. The modular kerb 10 is moulded from plastic as a single unitary element.

Referring to Figure 2, a second embodiment of the modular kerb is shown generally at 100. The second embodiment is substantially similar to the first embodiment but is half the length. For brevity, like features will be indicated with identical numerals with the addition of "100".

In this embodiment, the first and second engagement profiles include recesses 122, 124 for receiving the protrusions 22, 24. In this embodiment, the modular kerb 100 has a length of around 900mm. In other embodiments, the modular kerb may have a length of around 450mm.

An aperture 128 is provided in the upper surface 120. A cavity 132 is provided between the aperture 128 and channel 126. The aperture 128 is sealable by a cover 130. The cover 130 includes a locking mechanism including a latch 133 and a groove 134 to receive the latch 133.

The aperture 128 and cavity 132 provide an access point for accessing the cable. Cables need to be accessed to install new infrastructure and perform maintenance. Advantageously, the road, pavement or kerb does not need to be dug up to access the cable in the cavity 132.

A base of the cavity 132 where the cavity 132 meets the channel 126 is curved to prevent cable snagging and kinks when pulling cables through the cavity 132. A cable hook 136 is provided in the cavity 132 to house a coil of cable.

A rear channel 137 is provided between the channel 126 and the rear surface. The rear channel 135 extends into the cavity 132. A transition surface between the rear channel 135 and the cavity is curved to reduce cable snagging and kinks.

The upper surface 120 includes two lifting eyes 138 for facilitating lowering and raising of the modular kerb 10. The lifting eyes 138 are disposed on either side of the aperture 128. The lifting eyes 138 are slots with undercuts for receiving a bayonet style drain cover lifter.

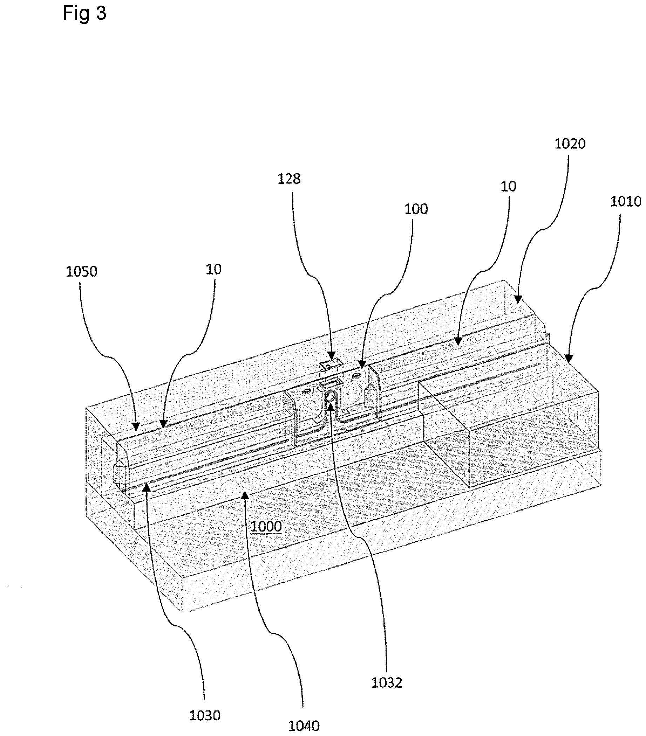

It is envisaged that the modular kerbs 10, 100 of the first and second embodiments are to be used together, as shown in Figure 3. The modular kerbs 10, 100 engage together through cooperation of their engagement profiles. The protrusions 22, 24 are received in the recesses 122, 124.

The channels 26, 126, form a substantially continuous channel for the cable 1030. The cavity 132 houses a coil of cable 1032 on the cable hook 136. The cable 1032 can be accesses through the aperture 128 as described above.

The modular kerb 10, 100 can be installed using the following method:
A concrete bed 1040 is provided on a substrate 1000. The cable 1030 is laid on the concrete bed 1040. A coil of the cable 1032 is mounted to the cable hook 136. Each part of the modular kerb 10, 100 is positioned over and lowered onto the cable 1030, in which the cable is received in the channel 26, 126. Adjacent modular kerbs 10, 100 are brought into engagement with each other. The lightweight nature of the plastic modular kerb 10, 100 facilitates lifting, lowering and engagement with adjacent modular kerbs 10,100, streamlining installation and reducing labour costs. Concrete can then be haunched 1050 at the rear of the kerbs.

The road 1010 may then be laid adjacent to the modular kerb 10,100. When the road is laid, the front surface 16, 116 abuts the road 1010. The lower surface 18, 118 sits in the concrete bed 1040. A portion of the upper surface 20, 120 is visible above the road. The rear surface abuts the haunched concrete 1050.

Where a concrete bed 1040 and haunched concrete 1050 are both already provided (e.g. when retrofitting the kerb), a layer of adhesive can be applied along the concrete bed 1040 and haunched concrete 1050. The adhesive is applied prior to lowering the modular kerb 10, 100 onto cable 1030 laid on the concrete bed 1040. In some embodiments, the adhesive is a resin. The resin bed may be typically 3-6mm, preferably 4mm in thickness.

In some embodiments, the size of the modular kerb 10, 100 can be tailored to accommodate the layer of adhesive. For example, the thickness of the kerb can be about 119mm which is slightly less than that of a standard kerb stone.

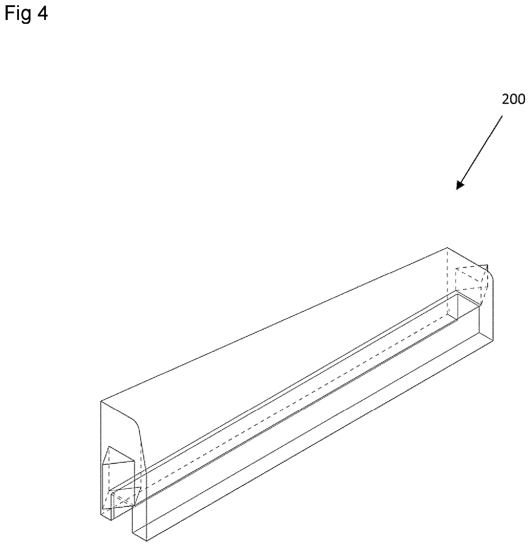

It will be appreciated that the shape and profile of the kerb can be varied. Examples of alternative embodiments are discussed below with respect to Figures 4 to 6b.

Referring to Figure 4, a third embodiment of a modular kerb is generally shown at 200. In this embodiment, the modular kerb 200 is tapered.

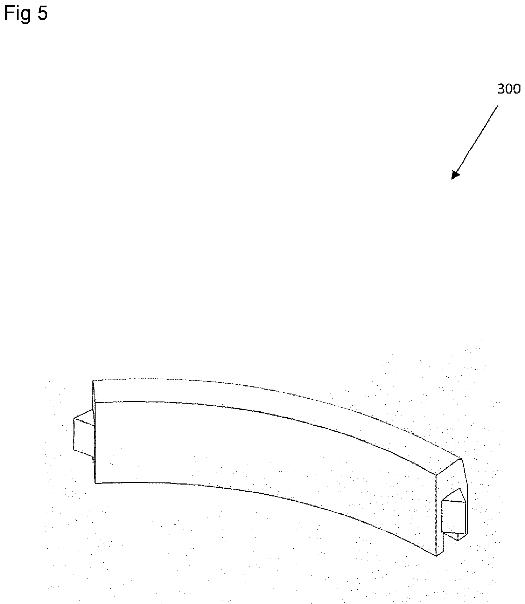

Figure 5 shows a fourth embodiment of the modular kerb is generally shown at 300. In this embodiment, the modular kerb 300 is curved to accommodate curves in a road, for example.

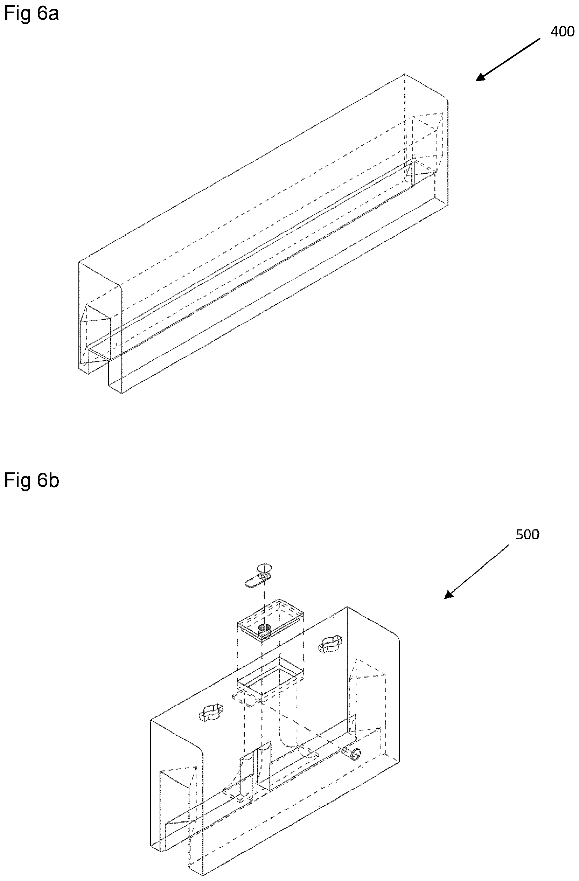

Figures 6a and 6b show fifth and sixth embodiments, generally shown at 400 and 500 respectively. The fifth and sixth embodiments are generally identical to those of the first and second embodiments, however they have a bullnose profile as opposed to a half-batter profile.

The embodiments described above are provided by way of example only, and various changes and modifications will be apparent to persons skilled in the art without departing from the scope of the present invention as defined by the appended claims.

## Claims

1. A modular kerb (10) for installing as part of a road, the modular kerb (10) comprising:
a first end (12) and a second end (14); a rear surface, a lower surface (18), a front surface (16) and an upper surface (20, 120),
the first end (12) having a first engagement profile and the second end (14) having a second corresponding engagement profile, the first engagement profile being engageable with the second engagement profile of one or more other modular kerbs and the second engagement profile being engageable with the first engagement profile of one or more other modular kerbs (10); and
the modular kerb (10) having a channel (26, 126) set into the lower surface (18) and extending between the first end (12) and second end (14) for receiving at least one power cable and/or data cable, in which the modular kerb (10) is made from plastics.

2. A modular kerb (10) as claimed in claim 1, in which the modular kerb (10) is integrally formed.

3. A modular kerb (10) as claimed in claim 1 or claim 2, in which the first engagement profile is a protrusion (22, 24) and the second engagement profile is a recess (122, 124).

4. A modular kerb (10) as claimed in any preceding claim, in which the modular kerb (10) is made from PVC.

5. A modular kerb (10) as claimed in any preceding claim in which the modular kerb (10) is provided in an internal or external curve, is tapered in height, and/or extends around an internal or external corner.

6. A modular kerb (10) as claimed in any preceding claim, in which at least one lifting eye (138) is disposed in the upper surface (120).

7. A modular kerb (10) as claimed in any preceding claim, in which a cavity (132) is provided through the kerb (10) between the upper surface (120) and the channel (126), for accessing a cable and optionally in which a releasable cover (130) is provided over the cavity (132) in the upper surface (120).

8. A modular kerb (10) as claimed in claim 7, in which transition surface areas between the cavity (132) and the channel (126) are curved.

9. A modular kerb (10) as claimed in any preceding claim, in which a rear channel (137) is provided from the rear surface into the channel (126).

10. A modular kerb (10) as claimed in claim 9, when dependent on claim 7, in which the rear channel (127) extends into the cavity (132).

11. A modular kerb (10) as claimed in claim 10, in which a transition surface between the rear channel (127) and the cavity (132) is curved .

12. A method of installing a modular kerb (10) as claimed in any preceding claim comprising providing a concrete bed (1040) for the modular kerb (10), laying a cable (1030) along the concrete bed (1040), and lowering the modular kerb (10) onto the bed with the cable (1030) being received in the channel (26, 126).

13. A method as claimed in claim 12, in which one or more modular kerbs (10) are subsequently connected to the first laid modular kerb (10).

14. A method as claimed in claim 12 or 13, in which concrete is provided in a haunch along the rear side of the or each modular kerb (10).

15. A method of installing a modular kerb (10) as claimed in any of claims 1 to 11 comprising providing a layer of adhesive along a previously laid concrete bed (1040) and along a previously laid haunch, providing a cable (1030) along the previously laid concrete bed, and lowering the modular kerb (10) into the adhesive with the cable (1030) being received in the channel (26, 126), the adhesive bonding the modular kerb (10) in position.
